# EUROPÄISCHE PATENTSCHRIFT

(11) **EP 0 941 889 B1**
(45) Veröffentlichungstag und Bekanntmachung des Hinweises auf die Patenterteilung: **07.07.2004**
(21) Anmeldenummer: 99104324.1
(22) Anmeldetag: 04.03.1999
(51) Int. Cl.: B60P 1/00, B60P 1/64, B60P 1/52, B60R 5/04, E05B 65/46, A47B 88/10, H05K 7/14

(54) **Ausziehvorrichtung**
Extraction device
Dispositif d'extraction

(30) Priorität: 12.03.1998 AT 44198
(43) Veröffentlichungstag der Anmeldung: 15.09.1999
(73) Patentinhaber: Fulterer Gesellschaft m.b.H., 6890 Lustenau (AT)
(72) Erfinder: Fulterer, Manfred, 6890 Lustenau (AT)
(74) Vertreter: Hefel, Herbert, Dipl.-Ing.

(56) Entgegenhaltungen:
- US-A- 2 242 958
- US-A- 2 739 027
- US-A- 3 700 301
- US-A- 4 950 123
- US-A- 5 052 878
- PATENT ABSTRACTS OF JAPAN vol. 1996, no. 10, 31. Oktober 1996 (1996-10-31) & JP 08 158767 A (PIKA CORP:KK), 18. Juni 1996 (1996-06-18)

## Beschreibung

Die Erfindung bezieht sich auf eine Ausziehvorrichtung mit den Merkmalen des Oberbegriffes des Patentanspruches 1.

Aus der US-PS 4 950 123 ist eine Ausziehvorrichtung dieser Art bekannt, die im Zusammenhang mit dem Ladeboden eines Lastkraftwagens verwendet wird. Mittels dieser Ausziehvorrichtung kann der Ladeboden des Lastkraftwagens nach hinten ausgezogen werden, was die Beladung erleichtert. Die hinteren Enden der Ausziehschienen sind über einen Querholm miteinander verbunden. An diesem Querholm ist ein schwenkbarer Hebel angelenkt, der seinerseits mit horizontal liegenden Bolzen verbunden ist, die sich quer zur Ausziehvorrichtung erstrecken. Parallel zur Ausziehvorrichtung ist eine Betätigungsstange gelagert, mit welcher der schwenkbare Hebel betätigbar ist. Die quer liegenden Bolzen, die mit ihrem einen Ende in je einer Bohrung im vertikalen Steg der Ausziehschienen gelagert sind, sind durch das Verschwenken des genannten Hebels axial verschiebbar. In der Korpusschiene und in der hier auch vorgesehenen Mittelschiene sind nun einige Bohrungen vorgesehen, in welche diese Bolzen einrasten können. Durch das Einrasten dieser Bolzen wird die Verschiebbarkeit der Schienen gegeneinander blockiert. Diese Blockierung setzt allerdings voraus, daß diese Bolzen sowohl in die für ihre Aufnahme vorgesehenen Bohrungen in der Mittelschiene wie auch in der Korpusschiene einrasten können, was deren fluchtende Lage voraussetzt.

Auch bei der Ausziehvorrichtung für den Ladeboden bei einem Kraftfahrzeug nach EP 314 176 A2 ist eine Blockiereinrichtung vorgesehen. Diese Blockiereinrichtung besteht aus federbelasteten Bolzen, die mittels einer Zugstange axial verschiebbar sind und die in Bohrungen einrasten, die im vertikalen Steg der feststehenden Korpusschiene ausgespart sind. Die axial verschiebbar gelagerten Bolzen sind am ausziehbaren Ladeboden vorgesehen. Bei der Betätigung der Zugstange muß hier der Ladeboden festgehalten werden, damit die erwähnten Bolzen gegenüber der auf sie einwirkenden Federkraft überhaupt verstellbar sind.

Schlußendlich ist noch die Ausziehvorrichtung nach A 2207/96 zu erwähnen, bei welcher ebenfalls ein federbelasteter Bolzen, der mittels einer parallel zu den Ausziehschienen angeordneten Betätigungsstange beaufschlagbar ist, mit einer Lochleiste zusammenwirkt, die feststehend an der Korpusschiene vorgesehen ist und parallel zu dieser verläuft.

Ausziehvorrichtungen werden bei Kraftwagen verwendet, um den Ladeboden ausziehbar zu gestalten. Dies vor allem bei Einsatz- und Rettungsfahrzeugen, die unter Umständen gewichtige Apparaturen und Geräte mitführen. Kann der Ladeboden ausgezogen werden, auf dem solche Geräte und Apparaturen untergebracht sind, so ist deren Zugänglichkeit erheblich erleichtert. Bei Werkstättenwagen wiederum sind in der Regel eine Vielzahl von Schubkästen vorgesehen, die mit gewichtigen Werkzeugen belastet sind. In all diesen Fällen muß dafür gesorgt werden, daß sich die meistens sehr leichtgängigen Ausziehvorrichtungen nicht selbsttätig in Bewegung setzen, wenn aufgrund der Bewegungen des Fahrzeuges Beschleunigungskräfte auf sie einwirken.

Es ist auch bekannt, Ausziehvorrichtungen bei Möbeln mit gegenständlichen Einrichtungen zu versehen, um das ausziehbare Möbelteil in einer vorgegebenen und gewünschten Stellung festzuhalten. Eine solche Konstruktion zeigt und beschreibt die US 3,700,301 A, und zwar in Verbindung mit sogenannten Kugelführungen. Oberhalb einer solchen Kugelführung, über welche eine Korpuswand eines Möbelstückes mit dem ausziehbaren Möbelteil verbunden ist, ist an der Korpuswand und oberhalb der Kugelführung eine Zahnleiste festgelegt. Mit dem ausziehbaren Möbelteil ist ein Zahnsegment verbunden, das über einen Schwenkhebel, der einseitig in einer vertikalen Kulisse geführt ist, angehoben bzw. auf die Zahnstange abgesenkt werden kann. Die dazu vorgesehene Schaltstange verläuft parallel zur Zahnstange und ist gegen die Kraft einer Feder verschiebbar. Die Schaltstange ist am ausziehbaren Möbelteil gelagert. Diese Mechanik ist ungeschützt und kann wohl nur im Zusammenhang mit Möbeln in geschlossenen Räumen verwendet werden. Für den Einsatz bei Kraftfahrzeugen ist diese ungeschützte Mechanik nicht geeignet. Durch den rauhen Betrieb, dem solche Kraftfahrzeuge unterworfen sind, würde diese Mechanik allzusehr verschmutzen und dadurch beschädigt oder gar unbrauchbar werden.

Eine damit vergleichbare Konstruktion zeigt und beschreibt auch die US 2,739, 027 A, ebenfalls in Verbindung mit einer sogenannten Kugelführung für Schubkästen. Als Riegelglied, das mit einer ortsfesten, am Möbelkorpus angebrachten Zahnstange in Wirkverbindung setzbar ist, dient ein am einen Ende eines schwenkbaren Winkelhebels angeordneter Bolzen, am anderen Ende dieses Winkelhebels greift eine an der ausziehbaren Schiene gelagerte Schaltstange an, die gegen die Kraft einer Feder verschiebbar ist. Auch hier liegt diese Mechanik zwischen Korpuswand und Seitenwand des ausziehbaren Möbelteiles offen und ungeschützt.

Schlußendlich ist in diesem Zusammenhang noch der Hochschrankauszug nach US 3,367,732 zu erwähnen. Hier wird zur Festlegung der Auszugsweite des ausziehbaren Möbelteiles ein Getriebe verwendet mit einem fliegend gelagerten Kegelrad, gegen welches mittels Federkraft ein Widerlager andrückbar ist. Diese hier vorgesehene Mechanik ist zwar unterhalb des Bodens des ausziehbaren Möbelschrankes angeordnet und auf diese Weise besser gegen Verschmutzung geschützt als die vorstehend beschriebenen Konstruktionen, jedoch ist diese Konstruktion so aufwendig, daß sie keinen Eingang in die Praxis gefunden hat.

Ausgehend von diesem Stand der Technik schlägt die Erfindung eine Ausziehvorrichtung vor, die für einen relativ rauhen Betrieb in Verbindung mit Kraftfahrzeugen einsetzbar ist, wobei diese Ausziehvorrichtung so ausgebildet ist, daß die der Blockierung dienenden Teile möglichst gegen Verschmutzung und mechanische Einwirkungen von außen geschützt sind, darüberhinaus sollen die gegeneinander bewegten Teile zur Verringerung der Reibung auch öl- oder schmierbar sein, wobei diese geschmierten und geölten Teile dem unmittelbaren Zugriff entzogen sein sollen. Die Erfindung löst dieses komplexe Problem durch jene Maßnahmen, die Inhalt und Gegenstand des kennzeichnenden Teiles des Patentanspruches 1 sind.

Des weiteren zielt die Erfindung darauf ab, die Blockiereinrichtung so zu gestalten, daß sie bei der Betätigung der Ausziehvorrichtung selbsttätig wirksam wird und wiederum ihre Funktion ausübt, sobald die Ausziehvorrichtung losgelassen wird.

Ausführungsbeispiele der Erfindung werden anhand der Zeichnung näher beschrieben, ohne die Erfindung dadurch einzuschränken. Es zeigen:
- Fig. 1: eine Draufsicht auf eine Ausziehvorrichtung;
- Fig. 2: einen Querschnitt nach der Linie II -II in Fig. 1;
- Fig. 3: eine Draufsicht auf die Frontseite der Ausziehvorrichtung;
- Fig. 4: einen Teilquerschnitt durch die Frontseite der Ausziehvorrichtung gemäß der Schnittlinie IV - IV in Fig. 3;
- die Fig. 5 und 6: je einen Längsschnitt durch die Blockiereinrichtung;
- Fig. 7: eine Ansicht der Blockiereinrichtung;
- Fig. 8: einen Querschnitt nach der Linie VIII - VIII in Fig. 5 und
- die Fig. 9 und 10: Längsschnitte nach Art der Fig. 5 und 6 durch zwei weitere und verschiedene Ausführungsformen der Blockiereinrichtung.

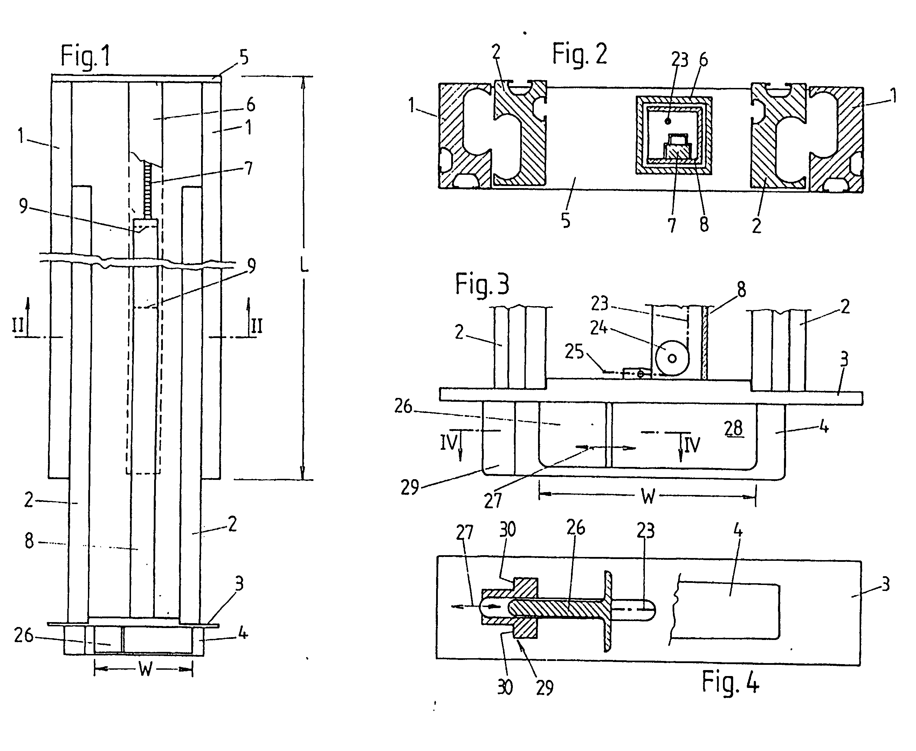

Die Ausziehvorrichtung, die in Fig. 1 in Draufsicht dargestellt ist, besitzt paarweise vorgesehene, feststehende Korpusschienen 1, an welchen mit hier nicht dargestellten Rollkörpem die Auszugschienen 2 verschiebbar gelagert sind. Mit den Ausziehschienen 2 kann beispielsweise ein hier nicht dargestellter Ladeboden eines Kraftfahrzeuges verbunden sein. Der gegenseitige Abstand der Schienenpaare kann beliebig gewählt werden und ist für die Erfindung nicht wesentlich. Die beiden Ausziehschienen 2 sind an ihrer vorderen Stirnseite mit einer Frontplatte 3 verbunden, die als Träger für einen hier U-förmigen Handgriff dient, dessen Öffnungsweite W etwa der Breite einer ausgewachsenen menschlichen Hand entspricht.

Feststehend und hier über einen Querholm 5 mit der Korpusschiene 1 verbunden ist ein Kastenprofil 6 vorgesehen, das sich parallel zu den Schienen 1 und 2 erstreckt. In diesem Kastenprofil 6 liegt eine Zahnstange 7, die mit ihrem hinteren Ende am Querholm 5 festgelegt ist und die frei nach vorne auskragt und in eine weitere Profilschiene 8 ragt, die einen U-förmigen Querschnitt besitzt, dessen offene Seite gegen eines der Schienenpaare 1, 2 gewandt ist. Die Zahnstange 7 erstreckt sich über etwas mehr als die halbe Länge L der Ausziehvorrichtung.

Im rückseitigen Abschnitt der im Querschnitt U-förmigen Profilschiene 8, in Fig. 1 angedeutet durch die strichlierte Linie 9, liegen zwei Führungen 10 und 11, in Längsrichtung der Profilschiene 8 voneinander distanziert und mit dieser beispielsweise über hier nicht dargestellte Schrauben fest verbunden. Diese Führungen bestehen aus Kunststoffklötzen mit je einer tunnelartigen Öffnung 12 und 22, durch welche die Zahnstange 7 hindurchgeführt ist. Diese zweckmäßigerweise aus Kunststoff gefertigten Führungen 10 und 11 sind beispielsweise mittels Schrauben mit der Profilschiene 8 verbunden.

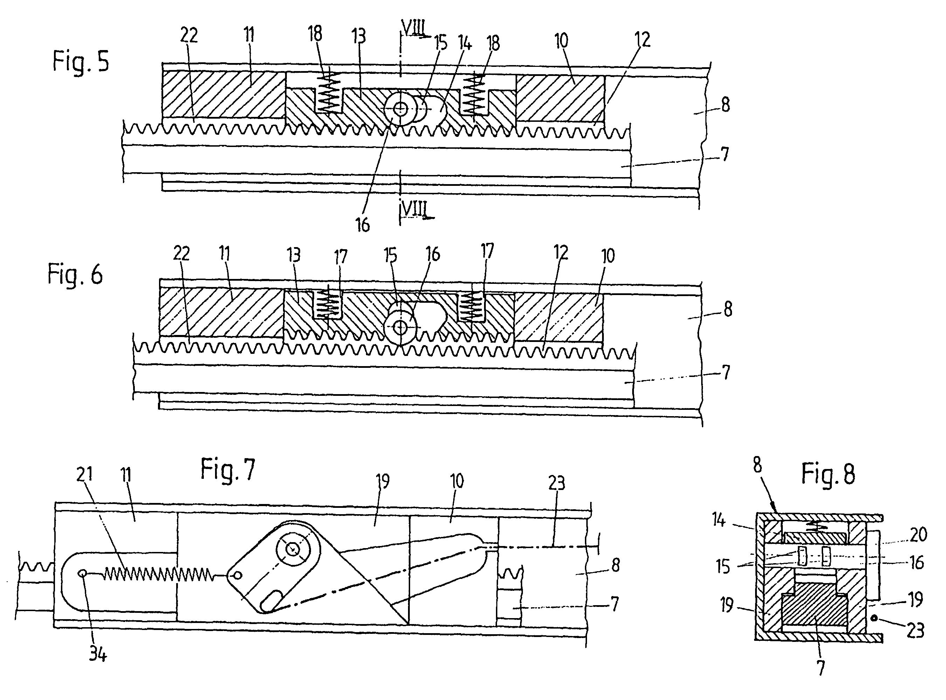

Zwischen diesen beiden in Längsrichtung der Profilschiene 8 voneinander distanzierten Führungen 10 und 11 liegt ein gerades Zahnsegment 13 mit einer mittleren länglichen Öffnung 14, welche von einer Nocken 15 aufweisenden Welle 16 durchsetzt ist. Zwei Sackbohrungen 17 an der Oberseite des geraden Zahnsegmentes 13 nehmen kleine Federn 18 auf, die sich an der oberen lnnenwandung der Profilschiene 8 abstützen und das Zahnsegment nach unten drücken. Seitliche Abdeckungen 19, ebenfalls in geeigneter Weise mit der Profilschiene 8 verbunden, dienen zur Sicherung des geraden Zahnsegmentes 13. Das eine Ende der Welle 16 ist mit einer kurbelartigen Lasche 20 fest verbunden. An dieser Lasche 20 greift eine Feder 21 an, die mit ihrem anderen Ende 34 an der feststehenden Führung 11 festgelegt ist. Die Lage der kurbelartigen Lasche 20, die durch die vorgespannte Feder 21 bedingt ist, ist aus Fig. 7 ersichtlich und entspricht der in Fig. 5 gezeigten Eingriffstellung des Zahnsegmentes 13. An der kurbelartigen Lasche 20 ist darüberhinaus das eine Ende eines Seilzuges 23 befestigt. Dieser Seilzug 23 verläuft innerhalb der Profilschiene 8 und ist an deren stimseitigem Ende (Fig. 3) um eine frei drehbar gelagerte Umlenkrolle 24 geführt. Das Ende 25 dieses Seilzuges 23 ist am Hebel 26 festgelegt, der in der Ebene des Handgriffes 4 verschiebbar gelagert ist (Pfeil 27).

Bei nicht betätigter Ausziehvorrichtung hält die Kraft der Feder 21 die kurbelartige Lasche 20 in der aus Fig. 7 ersichtlichen Lage, dabei ist das Zahnsegment 13 im kämmenden Eingriff mit der ortsfesten Zahnstange 7 (Fig. 5). Die Ausziehvorrichtung ist damit blockiert. Der Hebel 26 überdeckt dabei einen Teil der Öffnung 28 des U-förmigen Handgriffes 4. Die Blockiereinrichtung ist in jeder der möglichen Lagen von Korpusschiene 1 und Ausziehschiene 2 in aktiver Stellung. Wird nun die Ausziehvorrichtung betätigt und dabei der Handgriff 4 gefaßt, so drängt die in die Öffnung 28 dieses Handgriffes 4 eingreifende Hand den verschiebbar gelagerten Hebel 26 nach links (Fig. 3 und Fig. 4), wodurch der Seilzug 23 relativ verkürzt wird und dadurch die Lasche 20 mit der Welle 16 verschwenkt wird, deren Nocken 15 das gerade Zahnsegment 13 gegen die Kraft der Federn 18 anhebt, und dabei wird der kämmende Eingriff zwischen dem Zahnsegment 13 und der Zahnstange 7 gelöst (Fig. 6). Nun kann die Ausziehvorrichtung betätigt werden. Wird der Handgriff 4 wieder losgelassen, so zieht die gespannte Feder 21 über die Lasche 20 die Welle 16 wieder in ihre Ursprungslage (Fig. 5) zurück und das gerade Zahnsegment 13 greift wiederum kämmend in die ortsfeste Zahnstange 7 ein. Die in Fig. 3 bzw. 4 linke Wange 29 des U-förmigen Handgriffes 4 besitzt einen Absatz 30. Hier an diesem Absatz 30 kann der Daumen der eingreifenden Hand angelegt werden, was die Verschiebung des Hebels erleichtert. Dabei kann der Daumen am oberen oder am unteren Absatz angelegt werden.

Im vorstehend beschriebenen Ausführungsbeispiel ist das Zahnsegment 13 als gerade, quaderförmige Baukomponente ausgebildet.

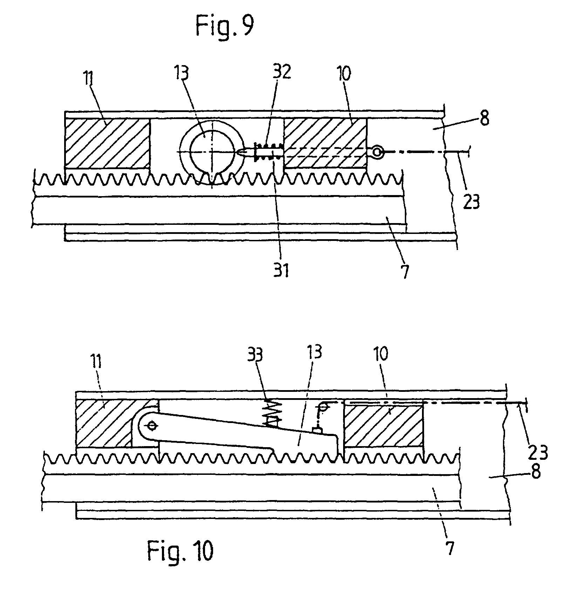

Fig. 9 zeigt nun ein Ausführungsbeispiel, in dem das Zahnsegment 13 als frei drehbar gelagertes Zahnritzel gestaltet ist. In der Führung 10 ist hier eine zur Längserstreckung der Profilschiene 8 parallele Bohrung zur Aufnahme eines stiftförmigen Riegelgliedes 31 vorgesehen, das unter der Kraft einer Feder 32 in eine Zahnlücke des Zahnsegmentes 13 formschlüssig eingreift und so die Drehung dieses Ritzels blockiert. Das eine Ende dieses Riegelgliedes 31 ist mit dem Seilzug 23 verbunden. Die Feder 31 entspricht, was ihre Funktion betrifft, der Feder 21 beim erstbesprochenen Ausführungsbeispiel. Diese Federn sichern die Blockiereinrichtung, wenn die Ausziehvorrichtung nicht betätigt wird.

Beim Ausführungsbeispiel nach Fig. 10 ist das Zahnsegment 13 als schwenkbar gelagertes, hebelartiges Riegelglied 31 ausgebildet. Dieses Riegelglied ist mit seinem einen Ende in der Führung 11 gelagert. Das vordere Ende dieses Riegelgliedes 31 ist mit dem Seilzug 23 verbunden. Eine Feder 33 drückt dieses Riegelglied in seine Eingriffslage mit der Zahnstange 7.

Beim erstbesprochenen Ausführungsbeispiel dienen die Führungen 10 und 11 mit ihren tunnelartigen Öffnungen 12 und 22 sowohl zur Führung des Zahnsegmentes 13 wie auch zur Führung der Zahnstange 7. Bei den anderen beiden besprochenen Ausführungsbeispielen nach den Fig. 9 und 10 dienen die Führungen 10 und 11 zur Führung der Zahnstange 7. Für das als Zahnritzel ausgebildete Zahnsegment 13 haben diese beiden Führungen 10 und 11 keine unmittelbare Funktion. Wohl aber dient hier die Führung 10 zur Aufnahme eines stiftartigen oder bolzenartigen Riegelgliedes 31. Beim Ausführungsbeispiel nach Fig. 10 dient die eine Führung 11 als Lager für die Schwenkachse des als Hebel ausgebildeten Riegelgliedes. Die andere Führung 10 besitzt eine Längsbohrung zur Durchführung des Seilzuges 23.

Dank der vorstehend beschriebenen Maßnahme ist die Blockiereinrichtung bestmöglich gegen Verschmutzung geschützt und die eventuell geölten oder geschmierten Teile sind darüberhinaus dem unmittelbaren Zugriff entzogen.

Im gezeigten Ausführungsbeispiel sind die Achsen der Zähne des Zahnsegmentes und der Zahnstange im wesentlichen parallel zur Ebene der Ausziehvorrichtung. Diese parallele Lage der Achsen der Zähne ist für die Erfindung nicht wesentlich. Grundsätzlich könnte die aus Zahnstange 7 und Zahnsegment 13 bestehende Baueinheit verdreht werden, so daß die Achsen der genannten Zähne im wesentlichen rechtwinkelig stehen zur Ebene der Ausziehvorrichtung. Des weiteren wäre es möglich, das verstellbare Zahnsegment mit der Korpusschiene 1 zu verbinden. Die Zahnstange wäre dann mit ihrem vorderen Ende an den Ausziehschienen festzulegen. Das Zahnsegment 13 müßte sich im vorderen Teil der Ausziehvorrichtung befinden.

### Legende

### zu den Hinweisziffern:

- 1: Korpusschiene
- 2: Ausziehschiene
- 3: Frontplatte
- 4: Handgriff
- 5: Querholm
- 6: Kastenprofil
- 7: Zahnstange
- 8: Profilschiene
- 9: strichlierte Linie
- 10: Führung
- 11: Führung
- 12: tunnelartige Öffnung
- 13: Zahnsegment
- 14: Öffnung
- 15: Nocken
- 16: Welle
- 17: Sackbohrung
- 18: Feder
- 19: Abdeckung
- 20: Lasche
- 21: Feder
- 22: tunnelartige Öffnung
- 23: Seilzug
- 24: Umlenkrolle
- 25: Ende
- 26: Hebel
- 27: Pfeil
- 28: Öffnung
- 29: Wange
- 30: Absatz
- 31: Riegelglied
- 32: Feder
- 33: Feder
- 34: Ende

## Patentansprüche

1. Ausziehvorrichtung mit mindestens einer feststehenden Korpusschiene (1) und mindestens einer Ausziehschiene (2), wobei diese Schienen (1, 2) paarweise vorgesehen sind und gegebenenfalls zwischen diesen Schienen je eine Mittelschiene angeordnet ist sowie einer die Schienen (1, 2) in ihrer jeweiligen Lage zueinander festhaltenden Blockiereinrichtung, die zumindest eine sich parallel zu den Schienen (1, 2) erstreckende ortsfeste Zahnstange (7) aufweist, mit welcher ein mit der Ausziehschiene (2) verbundenes, gegenüber der Zahnstange (7) verstellbares Zahnsegment (13) in Eingriff bnngbar ist, **dadurch gekennzeichnet, daß** die Zahnstange (7) in einer ersten Profilschiene (6) mit kastenförmigem Querschnitt liegt, die mit ihrem hinteren Ende mit der feststehenden Korpusschiene verbunden ist und in dieser Profilschiene (6) eine zweite Profilschiene (8) teleskopartig verschiebbar gelagert ist, wobei diese zweite Profilschiene (8) mit ihrem vorderen Ende mit mindestens einer Ausziehschiene (2) verbunden ist und sowohl die Zahnstange (7) wie auch das gegenüber der Zahnstange (7) verstellbare Zahnsegment (13) in der zweiten Profilschiene (8) vorgesehen sind und das Zahnsegment (13) im rückseitigen Abschnitt der zweiten Profilschiene (8) vorgesehen ist.

2. Ausziehvorrichtung nach Anspruch 1, **dadurch gekennzeichnet, daß** die zweite Profilschiene (8) und die vorderen Stirnseiten der paarweise vorgesehenen Ausziehschienen (2) an einer gemeinsamen Frontplatte (3) festgelegt sind.

3. Ausziehvorrichtung nach Anspruch 2, **dadurch gekennzeichnet, daß** an der Vorderseite der Frontplatte (3) ein L- oder U-förmiger Handgriff (4) festgelegt ist, in dessen Ebene ein mit einem Ende (25) eines Seilzuges (23) verbundener Hebel (26) verschiebbar gelagert ist, dessen andere Ende direkt oder indirekt mit dem verstellbaren Zahnsegment (13) in Wirkverbindung steht.

4. Ausziehvorrichtung nach Anspruch 3, **dadurch gekennzeichnet, daß** die lichte innere Weite (W) des U-förmigen Handgriffes (4) etwa der Breite einer menschlichen Hand entspricht und der verschiebbare Hebel (26) in die innere Weite des U-förmigen Handgriffes (4) ragt und diese verkleinert.

5. Ausziehvorrichtung nach Anspruch 1 oder 2, **dadurch gekennzeichnet, daß** das Zahnsegment (13) in der zweiten Profilschiene (8) zwischen Führungen (10, 11) quer zur Längsachse der Profilschiene (8) verstellbar gelagert ist und das Zahnsegment (13) von einer Nocken (15) aufweisenden Welle (16) durchsetzt ist und durch Verdrehen der Welle (16) das Zahnsegment (13) gegen die Kraft mindestens einer Feder (18) verstellbar, von der Zahnstange (7) abhebbar ist.

6. Ausziehvorrichtung nach Anspruch 5, **dadurch gekennzeichnet, daß** zur Verdrehung der Welle (16) der im wesentlichen zu den Schienen (1, 2) parallel verlaufender Seilzug (23) vorgesehen ist, dessen eine Ende (25) im stirnseitigen Bereich der Ausziehschiene (2) mit dem die relative Länge des Seilzuges (23) veränderbaren Hebel (26) verbunden ist.

7. Ausziehvorrichtung nach Anspruch 5, **dadurch gekennzeichnet, daß** das Zahnsegment (13) an seiner der Verzahnung abgewandten Seite Sackbohrungen (17) aufweist, in welchen Federn (18) angeordnet sind, die mit ihrem einen Ende an einer Innenwand der Profilschiene (8) anliegen.

8. Ausziehvorrichtung nach Anspruch 5, **dadurch gekennzeichnet, daß** die der Verstellung des Zahnsegmentes (13) dienende, Nocken (15) aufweisende Welle (16) zwischen den die Federn (18) aufnehmenden Sackbohrungen (17) liegt.

9. Ausziehvorrichtung nach Anspruch 5, **dadurch gekennzeichnet, daß** die die Nocken (15) aufweisende Welle (16) im Längsmittelbereich des Zahnsegmentes (13) angeordnet ist.

10. Ausziehvorrichtung nach Anspruch 5 oder 6, **dadurch gekennzeichnet, daß** die die Nocken (15) aufweisende Welle (16) an mindestens einem ihrer Enden eine kurbelartige Lasche (20) aufweist, an welcher das eine Ende des Seilzuges (23) festgelegt ist.

11. Ausziehvorrichtung nach Anspruch 10, **dadurch gekennzeichnet, daß** die kurbelartige Lasche (20) der Welle (16) mit einer Feder (21) belastet ist, die mit ihrem einen Ende an der Profilschiene (8) oder einer der Führungen (10, 11) für das Zahnsegment (13) verbunden ist und die die Nocken (15) aufweisende Welle (16) in einer Endstellung hält, in welcher das Zahnsegment (13) mit der Zahnstange (7) in Eingriff steht.

12. Ausziehvorrichtung nach Anspruch 1, **dadurch gekennzeichnet, daß** die das Zahnsegment (13) aufweisende zweite Profilschiene (8) einen einseitig offenen, U-förmigen Querschnitt aufweist.

13. Ausziehvorrichtung nach Anspruch 12, **dadurch gekennzeichnet, daß** die offene Seite der im Querschnitt U-förmigen zweiten Profilschiene (8) gegen eine der Ausziehschienen (2) hin gewandt ist.

14. Ausziehvorrichtung nach Anspruch 1, **dadurch gekennzeichnet, daß** das Zahnsegment (13) als frei drehbares Zahnritzel ausgebildet ist, das mittels eines über den Seilzug (23) zu betätigenden Riegelgliedes (31) gegenüber seiner Drehachse festlegbar ist.

15. Ausziehvorrichtung nach Anspruch 14, **dadurch gekennzeichnet, daß** das stiftförmig ausgebildete Riegelglied (31) parallel zur Längsachse der Zahnstange (7) verschiebbar gelagert ist.

16. Ausziehvorrichtung nach Anspruch 1, **dadurch gekennzeichnet, daß** das Zahnsegment (13) als mittels des Seilzuges (23) gegen die Kraft einer Feder (33) verschwenkbares, gezahntes Riegelglied ausgebildet ist.

17. Ausziehvorrichtung nach Anspruch 16, **dadurch gekennzeichnet, daß** die Schwenkachse des verschwenkbaren und gezahnten Riegelgliedes (31) rechtwinkelig zur Längsachse der Zahnstange (7) steht und parallel liegt zur Ebene der Ausziehvorrichtung.

18. Ausziehvorrichtung nach Anspruch 1, **dadurch gekennzeichnet, daß** die Blokkiereinrichtung zwischen den paarweise vorgesehenen Korpus- und Ausziehschienen liegt, vorzugsweise im Mittelbereich zwischen diesen Schienenpaaren.

## Claims

1. Pull-out device, with at least one fixed carcass rail (1) and at least one pull-out rail (2), these rails (1, 2) being provided in pairs, and, if required, in each case one middle rail being arranged between these rails, and with a blocking device retaining the rails (1, 2) in their respective relative position, the blocking device having at least one stationary toothed rack (7) which extends parallel to the rails (1, 2) and with which a toothed segment (13) connected to the pull-out rail (2) and movable relative to the toothed rack (7) can be brought into engagement, **characterised in that** the toothed rack (7) lies in a first profiled rail (6) with a box-shaped cross-section, connected by its rear end to the fixed carcass rail, and a second profiled rail (8) is telescopically displaceably mounted in this profiled rail (6), this second profiled rail (8) being connected by its front end to at least one pull-out rail (2), and both the toothed rack (7) and the toothed segment (13) movable relative to the toothed rack (7) being provided in the second profiled rail (8), and the toothed segment (13) being provided in the rear section of the second profiled rail (8).

2. Pull-out device according to Claim 1, **characterised in that** the second profiled rail (8) and the front ends of the pull-out rails (2) provided in pairs are secured to a common front plate (3).

3. Pull-out device according to Claim 2, **characterised in that** an L- or U-shaped handle (4) is secured to the front side of the front plate (3), in the plane of which handle there is displaceably mounted a lever (26) which is connected to one end (25) of a control cable (23), the other end of which is operatively connected directly or indirectly to the movable toothed segment (13).

4. Pull-out device according to Claim 3, **characterised in that** the clear inner width (W) of the U-shaped handle (4) corresponds approximately to the breadth of a human hand, and the displaceable lever (26) projects into the inner width of the U-shaped handle (4) and reduces this inner width.

5. Pull-out device according to Claim 1 or 2, **characterised in that** the toothed segment (13) is mounted in the second profiled rail (8) between guides (10, 11) so as to be movable transversely to the longitudinal axis of the profiled rail (8), and the toothed segment (13) is traversed by a shaft (16) having cams (15) and by rotating the shaft (16) the toothed segment (13) can be moved against the force of at least one spring (18) and lifted off the toothed rack (7).

6. Pull-out device according to Claim 5, **characterised in that** the control cable (23) running substantially parallel to the rails (1, 2) is provided for rotating the shaft (16), one end (25) of which control cable is connected, in the front region of the pull-out rail (2), to the lever (26) which can alter the relative length of the control cable (23).

7. Pull-out device according to Claim 5, **characterised in that** the toothed segment (13) has, at its side facing away from the toothing, blind bores (17) in which there are arranged springs (18) which bear by one of their ends against an inner wall of the profiled rail (8).

8. Pull-out device according to Claim 5, **characterised in that** the shaft (16) serving to move the toothed segment (13) and having cams (15) lies between the blind bores (17) accommodating the springs (18).

9. Pull-out device according to Claim 5, **characterised in that** the shaft (16) having the cams (15) is arranged in the longitudinal middle region of the toothed segment (13) .

10. Pull-out device according to Claim 5 or 6, **characterised in that** the shaft (16) having the cams (15) has, at least at one of its ends, a crank-like plate (20), to which one end of the control cable (23) is secured.

11. Pull-out device according to Claim 10, **characterised in that** the crank-like plate (20) of the shaft (16) is loaded by a spring (21) which is connected by one of its ends to the profiled rail (8) or one of the guides (10, 11) for the toothed segment (13) and keeps the shaft (16) having the cams (15) in an end position in which the toothed segment (13) is in engagement with the toothed rack (7).

12. Pull-out device according to Claim 1, **characterised in that** the second profiled rail (8), containing the toothed segment (13), has a U-shaped cross-section open on one side.

13. Pull-out device according to Claim 12, **characterised in that** the open side of the cross-sectionally U-shaped second profiled rail (8) faces one of the pull-out rails (2) .

14. Pull-out device according to Claim 1, **characterised in that** the toothed segment (13) is designed as a freely rotatable pinion which can be fixed relative to its axis of rotation by means of a locking member (31) to be actuated via the control cable (23).

15. Pull-out device according to Claim 14, **characterised in that** the locking member (31), which is of pin-shaped design, is mounted so as to be displaceable parallel to the longitudinal axis of the toothed rack (7).

16. Pull-out device according to Claim 1, **characterised in that** the toothed segment (13) is designed as a toothed locking member pivotable against the force of a spring (33) by means of the control cable (23).

17. Pull-out device according to Claim 16, **characterised in that** the pivot axis of the pivotable and toothed locking member (31) is perpendicular to the longitudinal axis of the toothed rack (7) and lies parallel to the plane of the pull-out device.

18. Pull-out device according to Claim 1, **characterised in that** the blocking device lies between the carcass rails and pull-out rails provided in pairs, preferably in the middle region between these rail pairs.

## Revendications

1. Dispositif d'extension, comprenant au moins un rail de base (1) fixe, et au moins un rail d'extension (2), ces rails (1, 2) formant chaque fois une paire avec, et le cas échéant, entre eux, un rail médian et un dispositif de blocage maintenant les rails (1, 2) l'un par rapport à l'autre dans toute position, ce dispositif présentant au moins une crémaillère (7) fixe, parallèle aux rails (1, 2) et avec laquelle peut être amené en prise un segment denté (13) relié au rail d'extension (2) et réglable par rapport à la crémaillère (7),
**caractérisé en ce que**
- la crémaillère (7) est logée dans un rail profilé (6) en forme de caisson qui, par son extrémité arrière, est relié au rail de base fixe, un second rail profilé (8) étant monté dans le premier (6) en pouvant glisser télescopiquement dans celui-ci, et étant relié par son extrémité avant à au moins un rail d'extension (2),
- la crémaillère (7), comme également le segment denté (13) mobile par rapport à elle, sont prévus dans le second rail profilé (8), le segment denté (13) se trouvant dans la section arrière du second rail profilé (8).

2. Dispositif d'extension selon la revendication 1,
**caractérisé en ce que**
le second rail profilé (8) et les faces frontales avant des rails d'extension (2) prévus par paires sont fixés à une plaque frontale commune (3).

3. Dispositif d'extension selon la revendication 2,
**caractérisé en ce que**
sur le côté avant de la plaque frontale (3) est fixée une poignée (4) ayant la forme d'un L ou d'un U, et dans le plan de cette poignée peut coulisser un levier (26) relié à une extrémité (25) d'un câble de traction (23) dont l'autre extrémité coopère directement ou indirectement avec le segment denté réglable (13).

4. Dispositif d'extension selon la revendication 3,
**caractérisé en ce que**
la largeur de passage interne libre (W) de la poignée en U (4) correspond sensiblement à la largeur d'une main humaine et le levier (26) coulissant (26) pénètre dans le passage interne de la poignée (4) en le réduisant.

5. Dispositif d'extension selon la revendication 1 ou 2,
**caractérisé en ce que**
le segments denté (13) peut coulisser dans le second rail profilé (8) et être réglable entre des guidages (10, 11) transversalement à la direction longitudinale de ce rail (8), et le segment denté (13) est traversé par un arbre (16) présentant une came (15) de sorte qu'une rotation de l'arbre (16), peut le déplacer contre la force d'au moins un ressort (18) et le dégager de la crémaillère (7) par soulèvement.

6. Dispositif d'extension selon la revendication 5,
**caractérisée en ce que**
pour faire tourner l'aube (16) le câble de traction(23) essentiellement parallèlement aux rails (1,2) est prévu avec une de ses extrémités (25) reliée dans la zone frontale du rail d'extension (2) en levier (26) permettant de faire varier la longueur de câble (23).

7. Dispositif d'extension selon la revendication 5,
**caractérisé en ce que**
l'élément denté (13), sur son côté opposé à la denture, présente des trous borgnes (17) dans lesquels sont montés des ressorts (18) appliqués par une extrémité sur une paroi interne du rail profilé (8).

8. Dispositif d'extension selon la revendication 5,
**caractérisé en ce que**
l'arbre (16) portant la came (15) servant à déplacer le segment denté (13) se trouve entre les trous borgnes (17) recevant les ressorts (18).

9. Dispositif d'extension selon la revendication 5,
**caractérisé en ce que**
l'arbre (16) portant la came (15) est monté vers le milieu du segment denté (13).

10. Dispositif d'extension selon la revendication 5 ou 6,
**caractérisé en ce que**
l'arbre (16) portant la came (15) présente, à au moins une de ses extrémités, une patte (20) en forme de manivelle, à laquelle est fixée une extrémité du câble de traction (23).

11. Dispositif d'extension selon la revendication 10,
**caractérisé en ce que**
la patte (20), en forme de manivelle, de l'arbre (16) est chargée par un ressort qui est relié par une de ses extrémités au rail profilé (8) ou à un des guidages (10, 11) du segment denté (13) et maintient l'arbre (16) portant la came (15) dans une position finale où le segment denté (13) est en prise avec la crémaillère (7).

12. Dispositif d'extension selon la revendication 1,
**caractérisé en ce que**
le second rail profilé (8) présentant le segment denté (13) a une section en forme d'U, ouverte d'un côté.

13. Dispositif d'extension selon la revendication 12,
**caractérisé en ce que**
le côté ouvert du second rail profilé (8) à section en forme d'U est tourné vers un des rails d'extension (2).

14. Dispositif d'extension selon la revendication 1,
**caractérisé en ce que**
le segment denté (13) est un pignon denté tourné librement, qui peut être bloqué en rotation au moyen d'un organe de verrouillage (31) à actionner par le câble de traction (23).

15. Dispositif d'extension selon la revendication 14,
**caractérisé en ce que**
l'organe de verrouillage (31) en forme de tige peut coulisser parallèlement à l'axe longitudinal de la crémaillère (7).

16. Dispositif d'extension selon la revendication 1,
**caractérisé en ce que**
le segment denté (13) est constitué en tant qu'organe de verrouillage denté, pouvant basculer contre la force d'un ressort (33) sous l'action du câble de traction (23).

17. Dispositif d'extension selon la revendication 16,
**caractérisé en ce que**
l'axe de basculement de l'organe de verrouillage (31) basculant et denté, est perpendiculaire à l'axe longitudinal de la crémaillère (7) et parallèle au plan du dispositif d'extension.

18. Dispositif d'extension selon la revendication 1,
**caractérisé en ce que**
le dispositif de blocage est situé entre les rails de base et les rails d'extension prévus par paires, de préférence dans la zone médiane entre ces paires.
